# EUROPEAN PATENT APPLICATION

(11) **EP 0 657 806 A1**
(43) Date of publication of application: **14.06.1995**
(21) Application number: 94119507.5
(22) Date of filing: 09.12.1994
(51) Int. Cl.: G06F 9/00, G06F 13/26

(54) **Interrupt controller for an integrated circuit**

(30) Priority: 09.12.1993 US 163810
(71) Applicant: PITNEY BOWES INC., Stamford Connecticut 06926-0700 (US)
(72) Inventor: Lee, Young W., Orange, CT 06477 (US); Moh, Sungwon, Wilton, CT 06897 (US); Muller, Arno, Westport, CT 06880 (US)
(74) Representative: Avery, Stephen John

(57) **Abstract**

A programmable microprocessor control system includes a microprocessor (13) in bus communication with a plurality integrated of circuit modules (ASIC) (15), one of which integrated circuit modules is a interrupt controller (700). The microprocessor (13) is also in bus communication with memory units (Mu). Each of the integrated circuit modules generates a plurality of control signals in response to data placed on the bus by the microprocessor (13) and also generates one or more of a plurality of interrupt signals of one or more of a plurality of status types (INTR-0 through INTR-7), the interrupts representing a respective status of the source circuit module. The interrupt controller (700) includes a first group of programmable registers for enabling respective one of the interrupts (INTR0-INTR7) for each of the respective source circuit modules. and generating a respective masked interrupt signal (IMR(1)-IMR(6) of that type upon receiving an interrupt signal of that type from any one of source circuit modules. A prioritizing circuit is provided for receiving the masked interrupt signal (IMR(1)-IMR(6) and generating one of a plurality of priority interrupt signal (IP1-IP3) in response to a respective one of the masked interrupt signal (IMR(1)-IMR(6) wherein the number of priority interrupt signal (IP1-IP3) is less than the number of masked interrupt signals (IMR(1)-IMR(6).

## Description

The present invention relates to integrated circuit systems and, more particularly, to integrated circuit systems having a plurality of operating modules and a means of prioritizing the interrupt signals generated by the respective modules signalling a module condition or state.

European patent applications of even date are filed concurrently herewith corresponding to the following US applications commonly assigned to Pitney Bowes Inc.: US Patent Application Serial No. 08/163,627, entitled MULTIPLE PULSE WIDTH MODULATION CIRCUIT; US Patent Application Serial No. 08/165,134, entitled DUAL MODE TIMER-COUNTER; US Patent Application Serial No. 08/137,460, entitled DYNAMICALLY PROGRAMMABLE TIMER-COUNTER; US Patent Application Serial No. 08/163,774, entitled MEMORY ACCESS PROTECTION CIRCUIT WITH ENCRYPTION KEY; US Patent Application Serial No. 08/163,811, entitled MEMORY MONITORING CIRCUIT FOR DETECTING UNAUTHORIZED MEMORY ACCESS; US Patent Application Serial No. 08/163,771, entitled MULTI-MEMORY ACCESS LIMITING CIRCUIT FOR A MULTI-MEMORY DEVICE; US Patent Application Serial No. 08/163,790, entitled ADDRESS DECODER WITH MEMORY ALLOCATION FOR A MICRO-CONTROLLER SYSTEM; US Patent Application Serial No. 08/163,812, entitled ADDRESS DECODER WITH MEMORY WAIT STATE CIRCUIT; US Patent Application Serial No. 08/163,813, entitled ADDRESS DECODER WITH MEMORY ALLOCATION AND ILLEGAL ADDRESS DETECTION FOR A MICRO-CONTROLLER SYSTEM; US Patent Application Serial No. 08/164,100, entitled PROGRAMMABLE CLOCK MODULE FOR POSTAGE METERING CONTROL SYSTEM; and US Patent Application Serial No. 08/163,629, entitled CONTROL SYSTEM FOR AN ELECTRONIC POSTAGE METER HAVING A PROGRAMMABLE APPLICATION SPECIFIC INTEGRATED CIRCUIT.

The disclosure of these co-pending European applications are hereby incorporated herein by reference.

It is conventional to use integrated circuit systems to control system operation such as employed in electronic postage metering (EPM) systems. It is customary to develop a unique control system for each specific model of an apparatus. For example, each postage meter model has a microcontroller system specifically designed for controlling the function set of that electronic postage meter model. The microcontroller system is customarily comprised of a microprocessor in bus communication with a number of memory units and an applications specific integrated circuit (ASIC). It is now considered advantageous to develop a single microcontroller for a plurality of meter models which will offer the advantages of allowing one microcontroller to be utilized in a number of meters resulting in less variations in meter design and better design control for the manufacturer.

The ASIC is comprised of a plurality of modules programmable for the control of various system functions. It is customary for the respective system modules of the ASIC to issue an interrupt signal representative of certain module conditions, for example, error conditions. In order to develop a universal microprocessor control system, it is considered advantageous to provide a means of programmably enabling the required interrupt signals depending of the configuration on the employing system.

It is an objective of the present invention to present an interrupt controller for an integrated circuit wherein the integrated circuit has a plurality of circuit modules, and each of the respective modules generate one or more interrupts representative of an operating state of the respective module, wherein the interrupt can be assigned to one of a plurality of masked interrupts.

It is a further objective of the present invention to present an interrupt controller wherein masked interrupts can be prioritized to one of a plurality of priorities.

It is a further objective of the present invention to present an interrupt controller wherein the specific interrupt can be programmably enabled when the integrated circuit is comprised of a programmable microprocessor and application specific integrated circuit.

According to the invention, in one aspect, there is provided an interrupt controller for receiving a plurality of interrupt signals from a plurality of circuit modules, each of said modules having interrupt means for generating one or more of a plurality of interrupt signals of one of a plurality of status types (INTR-0 through INTR-7), each interrupt signal representing the status of the respective source circuit module, said interrupt controller comprising, first means for programmably enabling a respective one of said interrupts (INTR0-INTR7) for each of said respective source circuit modules, second means for receiving a respective interrupt signal type (INTR0-INTR7) from said respective module and generating a respective masked interrupt signal (IMR(1)-IMR(6)) of that type upon receiving an interrupt signal of that type from any one of the source circuit modules, and prioritizing means for receiving said masked interrupt signal (IMR(1)-IMR(6)) and generating one of a plurality of priority interrupt signals (IP1-IP3) in response to receiving a respective one of said masked interrupt signals (IMR(1)-IMR(6)), said number of priority interrupt signals (IP1-IP3) being less than the number of masked interrupt signals (IMR(1)-IMR(6)).

For a better understanding of the invention and to show how the same may be carried into effect, reference will now be made, by way of example, to the accompanying drawings, in which:
Fig. 1 is a schematic of a microcontroller system for a thermal printing EPM in accordance with one embodiment of the present invention;
Fig. 2 is a schematic of an interrupt prioritizing system;
Fig. 3 is a schematic of the module interrupt grouping;
Fig. 4 is a process flow diagram of the setting of the priority registers; and
Fig. 5 is a process flow diagram of the setting of the interrupt mask.

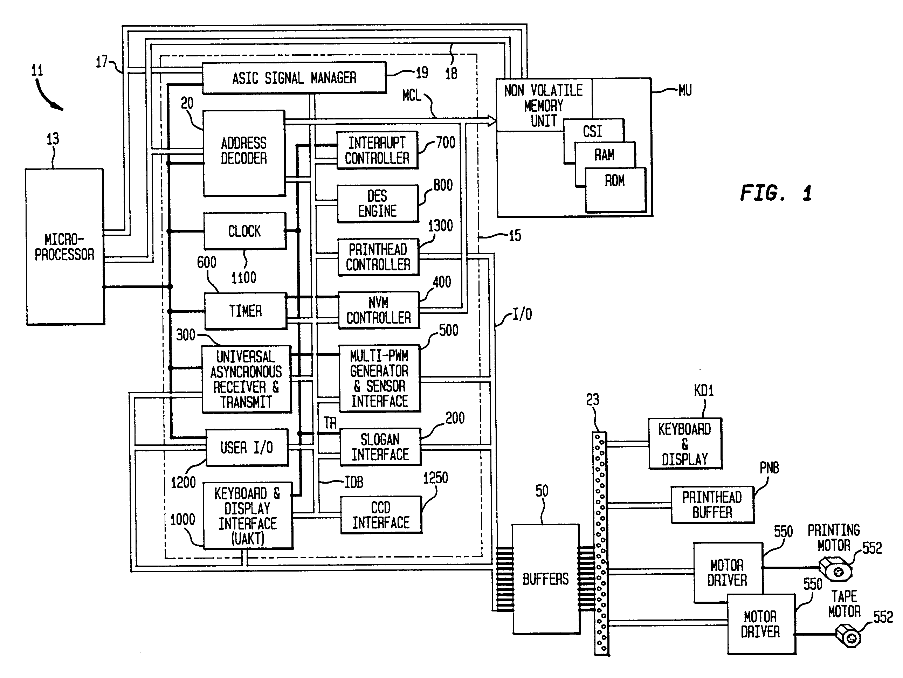

Referring to Fig. 1, a microprocessor control system, generally indicated as 11, which is preferably intended to control a thermal printing postage meter (not shown), is comprised of a microprocessor 13 in communication with an application specific integrated circuit (ASIC) 15 and a plurality of memory units (MU) via an address bus 18 and a data bus 17. The ASIC 15 is comprised of a number of integrated circuits, for example, ASIC signal manager 19, address decoder 20, clock 1100, timer module 600, UART module 300, user I/O 1200, keyboard and display interface 1000, interrupt control 700, encryption and decryption engine 800, memory controller 400, multi-PWM generator and sensor interface 500 and a slogan interface 200. It should be appreciated that it is within the contemplation of the present disclosure that the IC modules which make up the ASIC 15 may vary and the modules here identified are intended to illustrate the preferred embodiment of the invention.

The ASIC has an internal data bus (IDB) and a plurality of control lines CL, one group of which control lines are module interrupt lines IR. Certain of the modules are in communication with a buffer 50 via an internal bus IB. The buffer 50 is in bus communication with a coupler 23. The coupler 23 is in communication with various meter devices, such as, the key board display KDI, print head buffer PHB and motor drivers 550 which drive respective motors 552. In Fig. 1 the bus lines IDB and IB, and control lines IR and CL are depicted in simplified manner for the purpose of clarity.

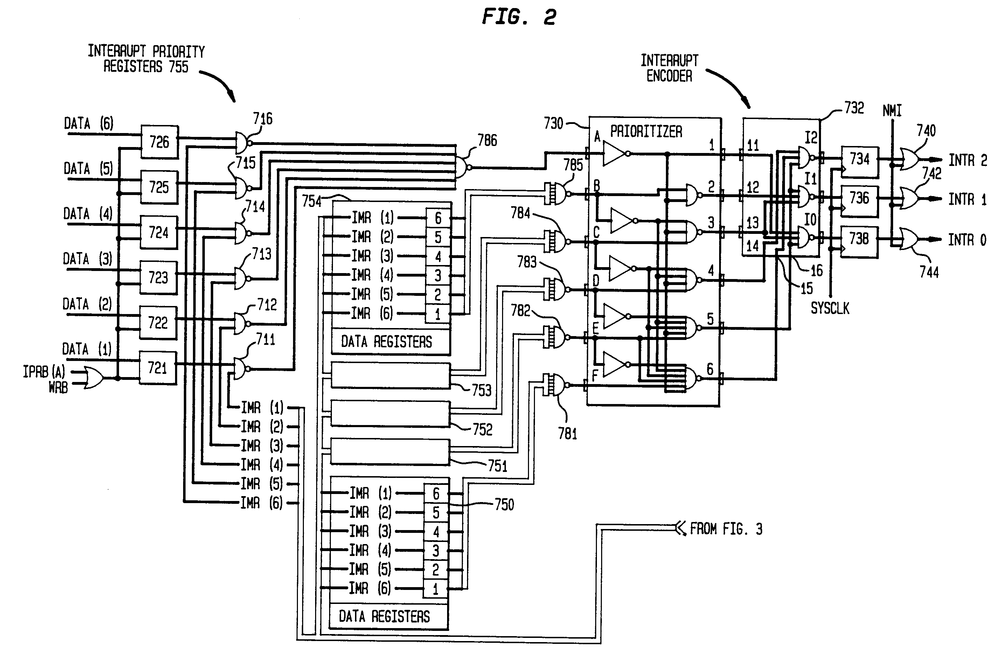

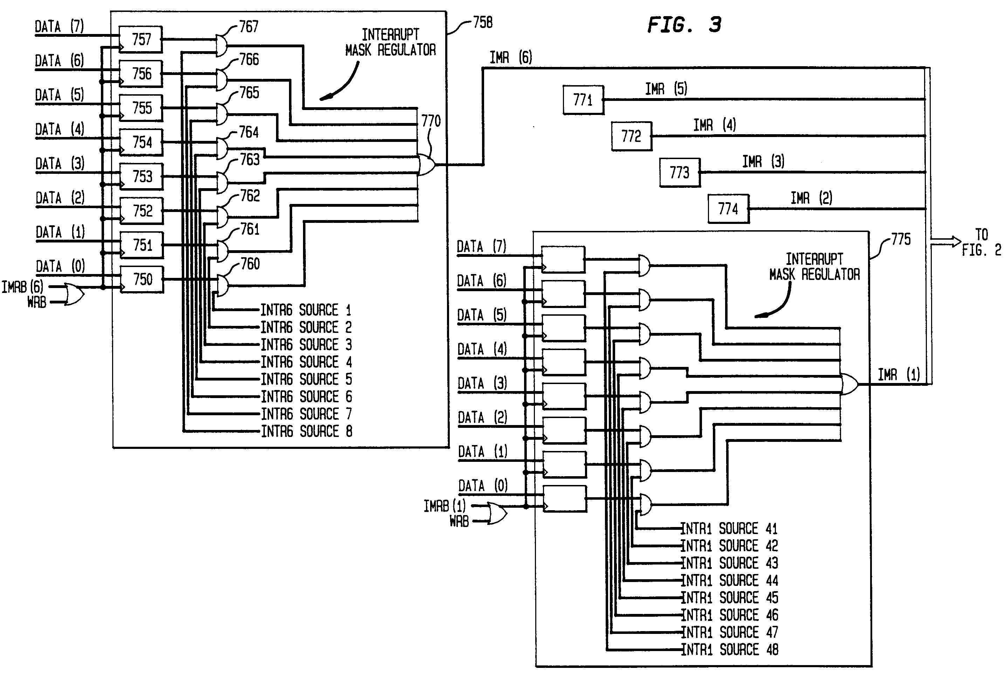

The interrupt controller 700 is illustrated in more detail in Figs. 2 and 3.

Referring first to Fig. 2, for the purpose of clarity the operation of the Interrupt controller will be explained working conversely from the output signal. The microprocessor has three interrupt inputs INTR0, INTR1 and INTR2. In the preferred embodiment, the microprocessor is a Motorola model MC68EC00. The individual modules of the ASIC 15 causes a NMI to be generated along with a maskable interrupt which will be further discussed later. As noted in Table 1 below, the microprocessor 13 is programmed to assign a priority, 1 through 6, to the module interrupt according to the signal level of the respective interrupts according to the interrupt signals NMI, INTR0, INTR1 and INTR2 from the prioritizer and interrupt controller 700.

**Table 1**

| NMI | PRIORITY | INTR 2 | INTR 1 | INTR 0 |
|---|---|---|---|---|
| 0 | X | 0 | 0 | 0 |
| 1 | 6 | 0 | 0 | 1 |
| 1 | 5 | 0 | 1 | 0 |
| 1 | 4 | 0 | 1 | 1 |
| 1 | 3 | 1 | 0 | 0 |
| 1 | 2 | 1 | 0 | 1 |
| 1 | 1 | 1 | 1 | 0 |

The interrupt levels INTR0, INTR1 and INTR2 are generated in response to the input levels at input A, B, C, D, E and F to the prioritizer 730 which produces a combination of output levels at output terminals 1 through 6 of the prioritizer 730. The output terminals 1 through 6 of prioritizer 730 are connected to respective inputs 10 through 16 of an interrupt encoder 732. The interrupt encoder 732 decodes the respective inputs presented at inputs 11 through 16 to responsively activate output terminals I2 through I0. The signal level of output terminal I2 is directed to flip-flop 734. The signal level of output terminal I1 is directed to flip-flop 736 and the signal level of output terminal I0 is directed to flip-flop 738. Activation of flip-flop 734 in response to the output level I2 is directed to AND gate 740 and, in like manner, the output level I1 is directed to AND gate 742. Further, in like manner the output level I0 is directed to AND gate 744.

In combination, the priority levels established by the interrupt encoder 732 are in response to the input levels presented at terminals A through F which are presented in Table 2.

**Table 2**

| A | B | C | D | E | F | PRIORITY |
|---|---|---|---|---|---|---|
| 1 | X | X | X | X | X | 6 |
| 0 | 1 | X | X | X | X | 5 |
| 0 | 0 | 1 | X | X | X | 4 |
| 0 | 0 | 0 | 1 | X | X | 3 |
| 0 | 0 | 0 | 0 | 1 | X | 2 |
| 0 | 0 | 0 | 0 | 0 | 1 | 1 |

Referring to Fig. 3, each of the circuit modules is designed to issue an interrupt upon the presence of a particular module condition. For example, the memory controller module as particularly described in co-pending European application corresponding to US Patent Application Serial Number 08/163,813, will issue an interrupt signal if an error condition is present. The interrupt signal issued is generated internally of the module and is designated as interrupt INTR0, INTR1, INTR2, INTR3, INTR4, INTR5, INTR6, or INTR7 as a matter of design choice depending on the criticality of the error condition. It should be appreciated that a module may generate more than one respective interrupt or combination of interrupts for each error condition. The respective interrupts are directed to the appropriate Interrupt Mask Regulator 758, 771, 772, 773, 774 or 775. The respective interrupts are enabled pursuant to writing data to the respective interrupt registers 750 through 757 of the respective Interrupt Mask Regulator 758, or 771 to 775. If the respective interrupt is enabled by writing an enabling bit to the respective interrupt register 750 through 757, the respective AND gate 760 through 767 of the respective Interrupt Mask Regulator 758, 771 to 775 is enabled. Enabling of any one of the AND gates 760 through 767 by generating a respective interrupt by a module enables an OR gate 770'. As indicated in Fig. 3, the afore described interrupt mask regulators 758, 771 to 775 are identical and permit 48 individual interrupt source signals to be represented by six mask interrupts signals IMR(1) through IMR(6).

Referring again to Fig. 2, the respective masked interrupts IMR(1) through IMR(6) are directed to each of the interrupt priority registers 750 through 755. Each interrupt priority register is comprised of a plurality of registers 721 through 726 which can be written to with an enabling bit in a manner subsequently described. The output of the registers 721 through 726 are directed to respective first inputs of NAND gates 711 through 716. Each NAND GATE 711 through 716 receives a respective IMR(6)-IMR(1) signal at a respective second input thereof. The outputs of NAND gates 711 through 716 are directed to NAND gate 786. The output from NAND gate 786 is directed to input A of prioritizer 730. Interrupt priority registers 750 through 754 are identical to priority registers 755 having their respective outputs directed to respective NAND gates 781 through 785. The output from NAND gate 781 through 785 are respectively directed to input F through B of the prioritizer 730.

It should now be appreciated that any of the interrupt mask signals IMR(1), IMR(2), IMR(3), IMR(4), IMR(5) or IMR(6) may be programmably selected to enable terminal A of the prioritizer 730 by setting the appropriate enabling bit of the registers 721, 722, 723, 724, 725 or 726. In like manner, an interrupt mask signal may be selected to enable any of terminals B through F of the prioritizer 730. Therefore, the priority to be assigned to the respective masked interrupts IMR(1) through IMR(6) may be programmably assigned. This process in effect sets the degree of prioritization by the prioritizer.

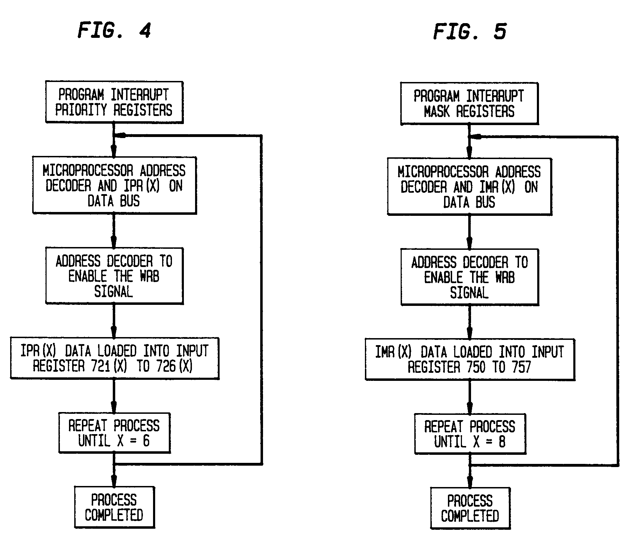

Referring to Figs. 4 and 5, the process of enabling the registers is logically presented. In brief, the microprocessor addresses the decoder 20 to write to the priority registers or the mask registers and places the appropriate data on the data bus. In response thereto the enabling data is written to the registers.

The above thus describes a microcontroller system comprised of a microprocessor which is in bus communication with a number of memory units and an ASIC. The ASIC includes a number of system modules, for example, a non-volatile memory security module, a print head controller module, a pulse width modulation module, etc. One of the modules of the ASIC is an interrupt controller. The interrupt controller can receive as many as 48 individual interrupt signals, each signal being programmably enabled. The individual signal are OR'ed into one of six priority groupings, each of which grouping may be program enabled and assigned a priority. In this manner, only those modules enabled or activated will be permitted to present an interrupt. And, further, prioritization of the maskable interrupts may be program enabled.

## Claims

1. An interrupt controller for receiving a plurality of interrupt signals from a plurality of circuit modules, each of said modules having interrupt means for generating one or more of a plurality of interrupt signals of one of a plurality of status types (INTR-0 through INTR-7), each interrupt signal representing the status of the respective source circuit module, said interrupt controller comprising:
first means for programmably enabling a respective one of said interrupts (INTR0-INTR7) for each of said respective source circuit modules;
second means (758) for receiving a respective interrupt signal type (INTR0-INTR7) from said respective module and generating a respective masked interrupt signal (IMR(1)-IMR(6)) of that type upon receiving an interrupt signal of that type from any one of the source circuit modules; and
prioritizing means (730) for receiving said masked interrupt signal (IMR(1)-IMR(6)) and generating one of a plurality of priority interrupt signals (IP1-IP3) in response to receiving a respective one of said masked interrupt signals (IMR(1)-IMR(6)), said number of priority interrupt signals (IP1-IP3) being less than the number of masked interrupt signals (IMR(1)-IMR(6)).

2. An interrupt controller as claimed in claim 1 further comprising means (755) for programmably enabling and prioritizing said second means to select ones of said masked interrupt signals (IMR(1)-IMR(6)).

3. A programmable microprocessor control system comprising an interrupt controller according to claim 1 or 2 and further having a microprocessor (13) in bus communication with a plurality integrated circuit modules (ASIC), memory means, and integrated circuit modules for generating a plurality of control signals in response to data placed on said bus by said microprocessor in response to said programming of microprocessor, each of said modules having interrupt means for generating one or more of a plurality of interrupt signals of one of a plurality of status types (INTR-0 through INTR-7), said interrupts representing a respective status of said source circuit module.

4. A control system according to claim 3, wherein said means first means comprises register means responsive to said programming of said microprocessor for enabling respective one of said interrupts (INTR0-INTR7) for each of said respective source circuit modules.

5. A control system as claimed in claim 3 or 4 wherein said means for programmably enabling and prioritizing said second means to select one of said masked interrupt signals (IMR(1)-IMR(6) comprises register means responsive to said programming of said microprocessor.

6. A control system according to any one of claims 3 to 5 wherein one of said integrated circuit modules is a memory access module for generating access control signals for said memory means, and another of said integrated circuit modules is a print control module.

7. An electronic postage meter or mailing machine system comprising a control system according to claim 6.
